# EUROPEAN PATENT SPECIFICATION

(11) **EP 0 894 401 B1**
(45) Date of publication and mention of the grant of the patent: **12.09.2001**
(21) Application number: 97916560.2
(22) Date of filing: 15.04.1997
(51) Int. Cl.: H04N 7/16

(54) **DIGITAL VIDEO BROADCAST SYSTEM**
DIGITALES VIDEOÜBERTRAGUNGSSYSTEM
SYSTEME DE RADIODIFFUSION VIDEONUMERIQUE

(30) Priority: 15.04.1996 US 15460 P
(43) Date of publication of application: 03.02.1999
(73) Proprietor: NDS LIMITED, West Drayton, Middlesex UB7 ODQ (GB)
(72) Inventor: THEXTON, Nicholas, London W4 QHX (GB); GOLD, Martin, Stockbridge, Hampshire SO20 6BE (GB); FELDMAN, Yurai, 90970 Har Adar (IL)
(74) Representative: Freed, Arthur Woolf
(86) International application number: GB9701025
(87) International publication number: WO9739582

(56) References cited:
- EP-A- 0 620 689
- WO-A-96/08109
- IBM TECHNICAL DISCLOSURE BULLETIN, vol. 36, no. 7, 1 July 1993, pages 169-170, XP000384219 "REMOTE CONSENSUAL CONTROL OF MULTIMEDIA PRESENTATIONS"

## Description

This invention relates to a Digital Video Broadcast (DVB) system, in particular to a system and method for integrating and managing the components of such a system in a manner which improves overall data throughput and control thereof.

In a typical DVB system there are often a number of functions which must be co-ordinated and synchronised. Each of these functions are generally controlled independently by a separate system which is controlled by an individual user. In this manner it is not unusual for a given function to be co-ordinated and controlled on two separate levels, which is obviously an unnecessary waste of resources. In addition the individual user may set restrictions and operating criteria which badly effect the operation of the broadcast as a whole. A further problem which can arise is in relation to the scheduling of programs and the transmission of data. If there are unexpected changes to the scheduling, such as a ball game going into extra time or a news flash, the changes caused may influence all other events and programs. This can mean that each operator of the individual functions has to amend the inputs to the broadcaster, this is inconvenient and time consuming.

In addition, conventional systems do not centralise all the required information to provide comprehensive engineering and monitoring facilities.

The specification of WO96/08109 describes a system for selectively distributing commercial messages to individually addressable subscriber terminals in a network. A server located in the network selectively tags commercial messages with routing information and converter addresses. The messages are transmitted on the network to be received and displayed by the addressed converters. The messages are inserted into commercial breaks in program material at times which are reserved within the commercial breaks.

According to one aspect of the present invention, there is provided an automatic system for managing the components of a digital video broadcast system in response to scheduling of, or, one or more rescheduling changes to the event scheduling of broadcast events, the broadcast system being operative to generate an output digital multiplex signal comprising plural channels and having system elements comprising an event synchroniser including a data cache, a service information controller, a multiplexer, a multiplexer controller, and a conditional access controller including a broadcast control centre, the automatic system comprising:
updating means for updating the data stored in the data cache in response to the broadcast events, the rescheduling change or changes to the scheduling of broadcast events
synchronising means for synchronising the updated data in real time across the different system elements to ensure correct referencing and;
formatting means for formatting the output digital multiplex signal according to the broadcast events, or the rescheduling change or changes in the event scheduling of broadcast events.

According to a second aspect of the invention, there is provided a method of managing the components of a digital video broadcast system in response to scheduling of, or, one or more rescheduling changes to the event scheduling of broadcast events, the broadcast system being operative to generate an output digital multiplex signal comprising plural channels and having system elements comprising an event synchroniser including a data cache, a service information controller, a multiplexer, a multiplexer controller,, and a conditional access controller including a broadcast control centre, the method comprising the steps of:
updating the data stored in the data cache in response to the broadcasting events or the rescheduling change or changes to the scheduling of broadcast events;
synchronising the updated data in real time across the different system elements to ensure correct referencing and;
formatting the output digital multiplex signal, according to the broadcast events or the change or changes in the scheduling.

The present invention has many advantages over the prior art, The present invention centralises and facilitates the management of a digital video broadcast system, bringing together many of the functions of the prior art and enabling changes to made in one central place and having the information disseminated to any other point that needs to know. Without the present invention, responding to unexpected changes was physically impossible, now unexpected changes are dealt with without problem. Multiplex management is facilitated further by enabling easy re-apportionment of bit-streams across multiplexers.

The present invention also provides advantages over the prior art by reducing the number of interfaces that are required between the different systems. In a typical prior art system traffic would have to talk directly to the automation system, the multiplexers, and conditional access systems, The automation system would have to talk to the multiplexers and conditional access systems. Synchronising all these different changes is problematical. With the present invention the traffic system talks to the AFS, the automation system talks to the AFS, and the AFS co-ordinates the required changes with the down-stream systems.

Reference will now be made, by way of example, to the accompanying drawings, in which:
Figure 1 is a block diagram of a preferred embodiment of the present invention;
Figure 2 is a block diagram showing the interfaces adopted in the Figure 1 system; and
Figure 3 shows the software configuration for the system.

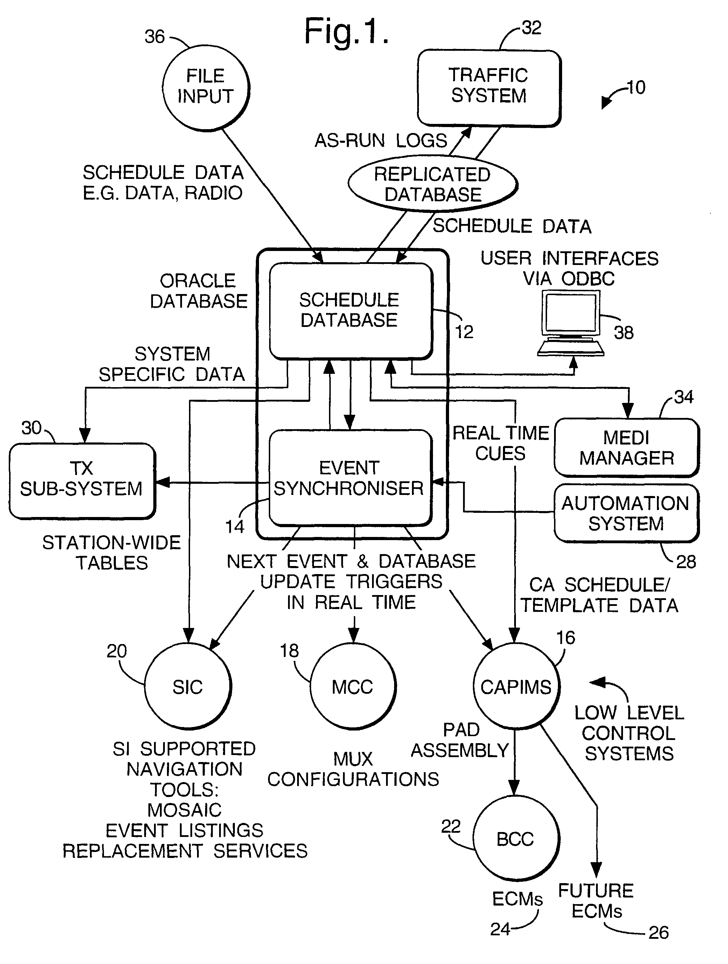

In a DVB system there are a number of functions which must be controlled. The system of the present invention, referred to as the Automatic File Server (AFS) bridges a critical gap in the range of studio control systems which are required to construct a multiplexed Digital Video Broadcast (DVB) system. The AFS illustrated in Figure 1 provides a number of functions. It provides a monitoring and control point for managing the total multiplex, and controlling the mix of services being transmitted. The system fulfils most of the software integration requirements in a broadcast centre. A central database, held in the operational areas, is provided and is the reference point to which other systems refer. A large protocol converter (not shown) which forms part of the Event Synchroniser 14 is provided which links the scheduling system to the playout and conditional access (CA) systems.

The protocol converter is responsible for data translation from the AFS internal format into messages that can be understood by Conditional Access and associated program information (CA-PIMS) 16, Multiplex Control (MCC) 18 and Service Information Control (SIC) 20.

This type of system will be of use when a variety of requirements are required, either alone or in combination. The system is also useful when addition or removal of services is required within the Multiplex at any time during operation. When using CA blackouts and replacement services or Near Video on Demand (NVOD) services and associated pay per view events the system of the invention provides an invaluable tool as explained below. In addition, when merging independent schedules from diverse services and using a central editing point for schedules and network tables the AFS provides advantages over the prior art. For example, when monitoring the services across a Multiplexer (mux) and when warning of bit-rate overload the AFS can provide improved performance.

The major functions provided by the AFS will be described in more detail below, but generally include the following. The use of the AFS as a tool for Multiplex Management, as a cohesive system within the studio complex, and as a central repository of information for all the different types of schedule driven systems.

Referring to Figure 1, a typical AFS system 10 is illustrated. The system 10 is implemented in two parts, namely a schedule database 12 utilising for example Oracle 7.0 and a real-time cache system (the Event Synchroniser 14), which improves the resilience of the system to failure and increases its data throughput.

The AFS monitors the state of all the on-air services event by event and formats the digital multiplex to accept them. In addition, the AFS also synchronises the data across all the playout systems so they reference each other correctly. As a result of the location of the AFS in the playout hierarchy, it also makes possible a number of important operational facilities which are described in greater detail below.

The automation system 28 is the part of the broadcast system responsible for the playout of source material according to the schedule provided by the traffic system 32. The source material could be provided by video or audio tapes, disks or other media.

The media manager 34 is responsible for keeping track of the source material and the location of the source - for example, if the source material is held on tape it knows which tape holds the required material.

The event synchroniser 14 controls a number of systems and provides real time control of a number of them. These include Conditional Access and associated program information (CAPIMS) 16, Multiplex control (MCC) 18 and Service Information Control (SIC) 20 and the associated supported navigation tools. The CAPIMS system includes a Broadcast control centre (BCC) 22 which produces Entitlement Control messages (ECMs) 24 which are transmitted via the MUX and future ECMs 26 which are stored on the AFS for later transmission via the SIC. The SIC supported Navigation tools include, for example, Mosaic, Event Listings and Replacement services which can make up an Electronic Program Guide (EPG). The event synchroniser receives real time messages from an automation system 28 and passes them to all of the transmission related control systems including the transmission sub-system 30. In the situation where the automation system is unavailable the same messages can be simulated by the event synchroniser, using the nominal schedule time of the event. The schedule database has two way communications with the event synchroniser, a traffic system 32 and a media manager 34. The schedule database receives data from either the traffic system or from a file input 36 and transmits information to the transmission sub-system, which include the SIC, the CAPIMS and one or more user interfaces 38 via an Open Database Connectivity (ODBC).

The Schedule Database 12 is the storage point for all attributes related to a programme event e.g.: nominal start time, the start of a message, CA services and blackout restrictions and the number of subtitle languages. The database is used by 'client' sub-systems which draw off the relevant data they require. The definition of this data set effectively defines the operation of the DVB system.

The structure of the database is designed around an analysis of the information required to control the downstream systems and holds the data in an appropriate form.

The Event Synchroniser 14 acts as the real-time element of the Database. The synchroniser caches approximately 6 hours of schedule data in memory to guard against down-time of the schedule database. By holding this data in memory, the Event Synchroniser can respond very quickly to real-time cues. Thus, the playout system is free to insert, drop or move events as programme requirements dictate, whilst the Event Synchroniser can prepare the downstream systems with no additional overhead.

The automation system could do this task directly if it was designed with MUX control in mind. However, given that there may be a video playout system, a radio automation system and a data playout system, the synchroniser provides the most open architecture while requiring little extra customisation of the other systems.

The MCC, the CA(PIMS) and the SIC make up what is known as the low level control systems. The actual function of each is described in greater detail below.

The Multiplexer Control Computer (MCC) controls the Multiplexer with regard to the combination of all the video, audio and data components and their various characteristics. Information within the Event Synchroniser informs the mux about the bit-rate which should be allocated to each service, and also the list of components associated with the current events.

The AFS has a valuable role in the integration of the CA system with the MCC in that it assigns the correct encryption key (ECM) to each service or component.

The CA interfacing philosophy balances the needs of both CA security and traffic system flexibility. The CA must operate in a secure environment and be responsible for the low level formatting of instructions to the subscriber smart card. CA-PIMS provides a high level interface which protects this operation. The traffic system should be able to assign particular CA parameters to events using a simple set of pre-configured instructions, but also in such a way that they can be fine tuned if necessary. The traffic system must also be able to derive the detail in these instructions, so that censorship violations can be spotted early in the scheduling process.

The interfacing method adopted uses a series of templates which can be equally applied on a simple subscription per channel basis, but also control complex mapping Pay per View (PPV) events and taping instructions.

The Service Information Controller (SIC) provides information within the broadcast data stream so that the subscriber receiver (IRD) can locate all the services being transmitted. The information held on the SIC is mastered in the AFS system and ultimately by the traffic system. This data can be viewed as a list or groups of services, and can also be supported using mosaics or more complex composite pages of video and text.

If the CA system is requested to blackout a particular event, a 'replacement' service can be flagged within the SIC which will be used if the subscriber is refused access to the particular service. When the blackout event finishes, the SIC informs the subscriber IRD to switch back to the normal service.

Without the AFS there is no easy method of evaluating the mix of services being transmitted within the digital transport stream. Whenever bandwidth is at a premium, bit-rates will need to be adjusted in order to allow the flexible addition and removal of services.

The AFS provides a method of viewing the mux wide view and consequently can be used to re-apportion bit-rates as business requirements develop. An example of how this could work is where different services are provided during the day to those during the night. For example it may be possible to have 7 normal channels which can be augmented by 3 further data channels at night. If the merging of the additional channels is handled by the AFS, then any unexpected events, such as a ball game running into extra time can be taken into consideration. If the game is scheduled to finish at 10.00pm but doesn't and the extra channels are due to start at the end of the game any changes can be easily handled by the AFS, such that the transmission of the extra channels is delayed until the game does actually finish.

The advantages of using a digital conditional access system from a scheduling perspective are that specific events can be given individual access parameters. These types of event include, pay per view events, black-out events across regional and demographic boundaries (e.g. close to the venue of a sports event) and replacement services needed to overcome censorship violations.

As mentioned above, the operational management must focus not only on an individual channel, but also at the mux layer. Many automation systems cannot provide a Multi-channel view of schedules - which is where the AFS can provide a very useful editing facility and tool. The editing point can be utilised locally by transmission controllers or remotely via traffic system personnel. The effect of the AFS is to take the scheduling directly to the heart of the transmission system such that events about to be transmitted are now accessible to the topmost scheduling process. Thus, if there are any changes they can be entered at one point only and dynamically disseminated to any other point which needs to know. This allows the system to have strong control over features such as delays, overloads and the like.

The editing capabilities of the AFS are such as to allow changes to be made from a traffic system at any time up to broadcast time. User interfaces are also provided that allow last-minute changes to be made simply. Any required changes need only be made in one place and the information is automatically distributed to all relevant systems. This is an important advantage over prior art systems. The present invention also allows, from a central point, monitoring of bandwidth allocation on all multiplexers as well as allowing bandwidth allocation to be adjusted on an event-by-event basis to optimise usage of any program stream.

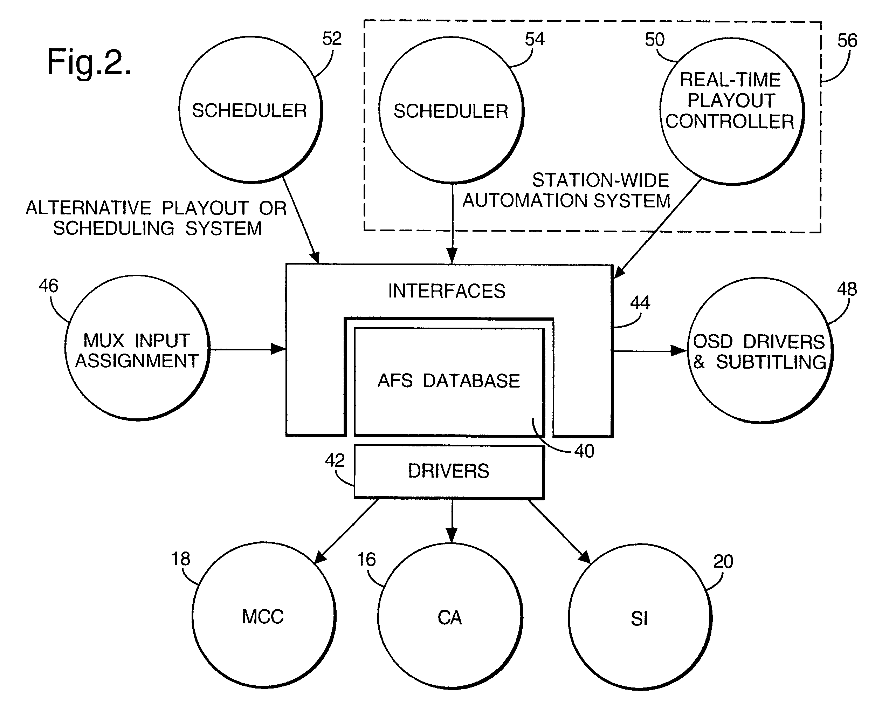

Referring to Figure 2 it is shown that the AFS supports interfaces to two categories of system, the low level control systems mentioned above and the higher level systems discussed in greater detail below. Low level drivers are used to interface to the three systems which control the make-up of the DVB multiplex. Custom interfaces have been developed to support high level studio system for scheduling and programme layout.

The custom interfaces provide interfaces between schedule database 12 and both traffic system 32 and file input 36. The traffic system provides direct filling of the AFS database however, with file input 36 parsers are required to translate the information in the files into data suitable for populating the AFS database tables.

The present invention also provides advantages over the prior art by reducing the number of interfaces that are required between the different systems. In a typical prior art system traffic would have to talk directly to automation, the muxes, and Conditional access systems, Automation would have to talk to the Muxes and conditional Access systems. Synchronising all these different changes is problematical. With the present invention Traffic talks to the AFS, Automation talks to the AFS, and the AFS co-ordinates the required changes with the down-stream systems.

The AFS database 40 is shown in figure 2 and has drivers 42 and interfaces 44 associated therewith. The drivers control communications to the MCC, the CA and the SI modules. The interfaces provide the links to a mux input assignment module 46, an on-screen display driver and subtitling module 48, a real time playout controller 50 and one or more schedulers 52 and 54. The first scheduler 52 is part of an alternative playout or scheduling system and the second 54 is part of a station-wide automation system 56.

The high level studio systems mentioned above which are provided by the system can be categorised into a traffic system, an automation system and a number of user interfaces.

The traffic system is actually a short hand term which describes a large number of programme scheduling and material management systems. 'Traffic' represents the point at which this data is merged to produce a specific programme schedule in detail. The AFS supports two types of interface to the traffic system, either an ODBC interface which allows database replication and hence is very responsive to changes, or a Flat-File interface which supports 'snapshot' schedule transfers. The AFS can therefore support schedule downloads from a number of diverse scheduling systems ranging from main frame machines to personal computers.

The studio automation system utilises the AFS schedule database as its source of play-lists for one or more channels. As with the other client systems, these lists are filtered to extract only the relevant fields which are required.

In the reverse direction real-time event cues generated by the automation system are sent to the Event Synchroniser. Two cues are normally generated - a 'tension' command which is sent approximately 20 seconds before an event begins, or a 'take' command at the actual programme transition. The automation system references the events concerned in the event synchroniser memory by event number which in turn sends a translated message to each clients system.

Since the two cues from the automation system are relatively simple, the AFS is not tied to working with one particular type of automation system.

In order to implement the key features of the invention, a number of user interfaces are required. The types of interface which must be supported relate to mux-wide edit views, network information table settings (satellite polarisation, frequency etc.), mux-wide component views including CA keys and bit rate, maintenance and alarm terminals, and a status display showing current on-air events and next events on a station-wide basis. The status display may be available as a video feed which can be displayed in monitor racks. In general the displays are configurable on a system by system basis.

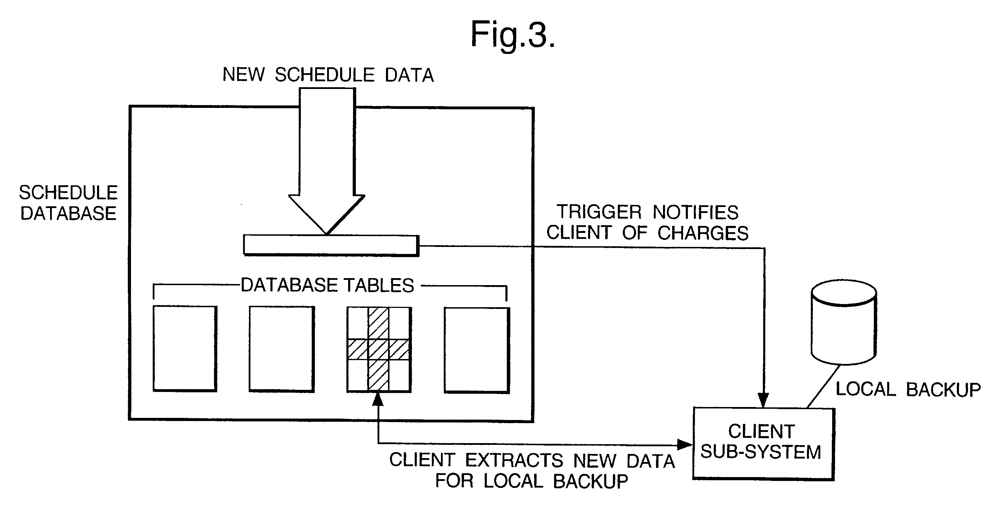

As previously mentioned the Schedule Database can be based upon an Oracle database such as the Oracle 7 RDBMS. The interface to the various client systems is achieved using triggers as illustrated in Figure 3. The triggers are configured to notify the sub-systems of changes to the data which affects them. The client systems are then responsible for querying the relevant tables to extract the new information. This exploits the inbuilt connectivity of the system.

The secondary benefit of this type of interfacing approach is that the server is not responsible for updating a client system if the latter fails or switches over to a backup system. In these cases, it is also possible for the server to know the state of the failed system.

The Event Synchroniser does however run custom software to provide the real-time messages to the client systems. In this instance, the trigger method is too cumbersome to translate the cues from the automation system and the event synchroniser generates it's own custom real time messages. This is shown in figure 1.

The custom software on the Event Synchroniser 14 receives real-time cues from the automation system 28 which identify the start of program events. This cue information is distributed by the event synchroniser 14 to the relevant downstream systems which, acting on this 'event-starting' information perform appropriate system reconfigurations.

In a preferred embodiment the hardware configuration utilises separate redundant pairs of servers, for both the synchroniser and the database. The database servers are designed with data integrity as their most critical design feature. Down-time in the database is masked by the synchroniser configuration, which utilises switch-over software to ensure an extremely rapid use of the backup system. Each of the sub systems can independently maintain their own local data backup which offers protection against Network failure.

Hardware reliability is provided by a number of features which occur in the event of a failure. Disks are protected against failure by using a mirrored disk system. Power supply failure is provided for by the use of automatic switch over to another system. Automatic failure recovery software provides for the event of a processor or memory failure. In the event of complete bus failure, the software package automatically switches to the secondary server. The system is based upon a redundant network architecture. In the event of a client failure the operator can move to a backup machine and continue working.

The main feature of the AFS tool have been detailed above, it will however be evident that a number of variations of the system are possible which will be evident to the person skilled in the art.

## Claims

1. An automatic system for managing the components of a digital video broadcast system in response to scheduling of, or, one or more rescheduling changes to the event scheduling of broadcast events, the broadcast system being operative to generate an output digital multiplex signal comprising plural channels and having system elements comprising an event synchroniser including a data cache, a service information controller, a multiplexer, a multiplexer controller, and a conditional access controller including a broadcast control centre, the automatic system comprising:
updating means for updating the data stored in the data cache in response to the broadcast events, the rescheduling change or changes to the scheduling of broadcast events
synchronising means for synchronising the updated data in real time across the different system elements to ensure correct referencing and;
formatting means for formatting the output digital multiplex signal according to the broadcast events, or the rescheduling change or changes in the event scheduling of broadcast events.

2. The system of claim 1, wherein the event synchroniser comprises a real-time data cache.

3. The system of claims 1 or 2 further including a schedule database containing all information relating to an event including nominal start time, conditional access services, blackout restrictions and a number of subtitle languages.

4. The system of claims 1, 2, or 3 wherein the event synchroniser receives real-time cues identifying the start of program events.

5. The system of any of claims 1 to 4, further including an automation system responsible for the playout of source material according to the schedule.

6. The system of claim 5, further including a media manager for submanagement of source material.

7. The system of any of claims 1 to 6, wherein the multiplex controller controls and formats the multiplexer according to the required video, audio and data components.

8. The system of any of claims 1 to 7, wherein changes to the event schedule are disseminated to the event synchroniser, the data cache, the service information controller, the multiplexer controller and the conditional access controller as required.

9. The system of any of claims 1 to 8, wherein the data cache maintains a 6 hour window of event data.

10. A method of managing the components of a digital video broadcast system in response to scheduling of, or, one or more rescheduling changes to the event scheduling of broadcast events, the broadcast system being operative to generate an output digital multiplex signal comprising plural channels and having system elements comprising an event synchroniser including a data cache, a service information controller, a multiplexer, a multiplexer controller,, and a conditional access controller including a broadcast control centre, the method comprising the steps of:
updating the data stored in the data cache in response to the broadcasting events or the rescheduling change or changes to the scheduling of broadcast events;
synchronising the updated data in real time across the different system elements to ensure correct referencing and;
formatting the output digital multiplex signal according to the broadcast events or the change or changes in the scheduling.

11. The method of claim 10 further including storing all information relating to an event including nominal start time, conditional access services, blackout restrictions and a number of subtitle languages in a schedule database.

12. The method of claims 10 or 11 further including receiving real-time cues identifying the start of program events at the event synchroniser.

13. The method of any of claims 10, 11 or 12 further comprising controlling and formatting the multiplexer according to the required video, audio and data components.

14. The method of any of claims 10 to 13 further comprising disseminating changes to the event schedule, the event synchroniser, the data cache, the service information controller, the multiplexer controller and the conditional access controller as required.

## Patentansprüche

1. Ein automatisches System zum Verwalten der Komponenten eines digitalen Videoübertragungssystems in Erwiderung auf die Planung oder eine oder mehrere Umplanungsänderungen der Ereignisplanung von Übertragungsereignissen, wobei das Übertragungssystem derart wirkt, um ein Ausgangsdigitalmultiplexsignal zu erzeugen, das mehrere Kanäle und Systemelemente aufweist, die einen Ereignissynchronisierer aufweisen, der einen Daten-Cache-Speicher, eine Dienstinformationssteuerung, einen Multiplexer, eine Multiplexersteuerung und eine Steuerung für bedingten Zugriff einschließt, die eine Übertragungssteuerungsstelle einschließt, wobei das automatische System aufweist:
Aktualisierungsmittel zum Aktualisieren der in dem Daten-Cache-Speicher gespeicherten Daten in Erwiderung auf die Übertragungsereignisse, die Umplanungsänderung oder Änderungen der Planung von Übertragungsereignissen;
Synchronisierungsmittel zum Synchronisieren der aktualisierten Daten in Echtzeit über die verschiedenen Systemelemente, um korrektes Referenzieren sicherzustellen, und;
Formatierungsmittel zum Formatieren des Ausgangsdigitalmultiplexsignals gemäß den Übertragungsereignissen oder den Umplanungsänderungen oder Änderungen in der Ereignisplanung der Übertragungsereignisse.

2. Das System nach Anspruch 1, wobei der Ereignissynchronisierer einen Echtzeit-Daten-Cache-Speicher aufweist.

3. Das System nach Anspruch 1 oder 2 schließt ferner eine Planungsdatenbank ein, die alle Informationen beinhaltet, die sich auf ein Ereignis bezieht, einschließlich nomineller Startzeit, Dienste für bedingten Zugriff, Ausfallrestriktionen und eine Anzahl von Untertitelsprachen.

4. Das System nach Anspruch 1, 2 oder 3, wobei der Ereignissynchronisierer Echtzeitaufrufe empfängt, die den Start eines Programmereignisses identifizieren.

5. Das System nach einem der Ansprüche 1 bis 4, das ferner ein Automationssystem einschließt, das für das Ausbeuten von Quellenmaterial gemäß der Planung zuständig ist.

6. Das System nach Anspruch 5, das ferner eine Medienverwaltung zum Unterverwalten von Quellenmaterial einschließt.

7. Das System nach einem der Ansprüche 1 bis 6, wobei die Multiplexsteuerung den Multiplexer gemäß den erforderlichen Video-, Audio- oder Datenkomponenten steuert und formatiert.

8. Das System nach einem der Ansprüche 1 bis 7, wobei Änderungen an der Ereignisplanung an den Ereignissynchronisierer, den Daten-Cache-Speicher, die Dienstinformationssteuerung, die Mulitplexersteuerung und die Steuerung für bedingten Zugriff wie gefordert verbreitet werden.

9. Das System nach einem der Ansprüche 1 bis 8, wobei der Daten-Cache-Speicher ein 6-Stunden-Fenster von Ereignisdaten aufrecht erhält.

10. Ein Verfahren zum Verwalten der Komponenten eines digitalen Videoübertragungssystems in Erwiderung auf die Planung oder eine oder mehrere Umplanungsänderungen der Ereignisplanung von Übertragungsereignissen, wobei das Übertragungssystem derart wirkt, um ein Ausgangsdigitalmultiplexsignal zu erzeugen, das mehrere Kanäle und Systemelemente aufweist, die einen Ereignissynchronisierer aufweisen, der einen Daten-Cache-Speicher, eine Dienstinformationssteuerung, einen Multiplexer, eine Multiplexersteuerung und eine Steuerung für bedingten Zugriff einschließt, die eine Übertragungssteuerungsstelle einschließt, wobei das Verfahren die Schritte aufweist:
Aktualisieren der in dem Daten-Cache-Speicher gespeicherten Daten in Erwiderung auf die Übertragungsereignisse, die Umplanungsänderung oder Änderungen der Planung von Übertragungsereignissen;
Synchronisieren der aktualisierten Daten in Echtzeit über die verschiedenen Systemelemente, um korrektes Referenzieren sicherzustellen, und;
Formatieren des Ausgangsdigitalmultiplexsignals gemäß den Übertragungsereignissen oder der Änderung oder Änderungen in der Planung.

11. Ein Verfahren nach Anspruch 10, das ferner einschließt:
Speichern aller Informationen, die sich auf ein Ereignis bezieht, einschließlich nomineller Startzeit, Dienste für bedingten Zugriff, Ausfallrestriktionen und einer Anzahl von Untertitelsprachen in einer Planungsdatenbank.

12. Das Verfahren nach Anspruch 10 oder 11, das ferner einschließt:
Empfangen von Echtzeitaufrufen, die den Start von Programmereignissen an dem Ereignissynchronisierer identifizieren.

13. Ein Verfahren nach einem der Ansprüche 10, 11 oder 12, das ferner aufweist:
Steuern und Formatieren des Mulitplexers gemäß den geforderten Video-, Audiound Datenkomponenten.

14. Das Verfahren nach einem der Ansprüche 10 bis 13, das ferner aufweist: Verbreiten von Änderungen der Ereignisplanung, des Ereignissynchronisierers, des Daten-Cache-Speichers, der Dienstinformationssteuerung, der Multiplexersteuerung und der Steuerung für bedingten Zugriff, wie gefordert.

## Revendications

1. Système automatique pour gérer les composantes d'un système de diffusion vidéo numérique en réponse à une planification d'événements de diffusion ou à une ou plusieurs modifications de replanification apportée(s) à la planification d'événement, le système de diffusion fonctionnant pour générer un signal de multiplexage numérique de sortie qui comprend plusieurs canaux et comportant des éléments système comprenant un synchroniseur d'événement qui inclut un cache de données, un contrôleur d'information de service, un multiplexeur, un contrôleur de multiplexeur et un contrôleur d'accès conditionnel incluant un centre de commande de diffusion, le système de fichier automatique comprenant:
un moyen de mise à jour pour mettre à jour les données qui sont stockées dans le cache de données en réponse aux événements de diffusion, à la modification ou aux modifications de replanification apportée(s) à la planification d'événements de diffusion;
un moyen de synchronisation pour synchroniser les données mises à jour en temps réel sur les différents éléments système afin d'assurer un référencement correct; et
un moyen de formatage pour formater le signal de multiplexage numérique de sortie en fonction des événements de diffusion ou de la modification ou des modifications de replanification apportée(s) à la planification d'événement d'événements de diffusion.

2. Système selon la revendication 1, dans lequel le synchroniseur d'événement comprend un cache de données temps réel.

3. Système selon la revendication 1 ou 2, incluant en outre une base de données de planification qui contient toutes l'information se rapportant à un événement incluant un instant de début nominal, des services d'accès conditionnels, des restrictions de coupure et un nombre de langues de sous-titre.

4. Système selon la revendication 1, 2 ou 3, dans lequel le synchroniseur d'événement reçoit des repères temps réel qui identifient le début d'événements de programme.

5. Système selon l'une quelconque des revendications 1 à 4, incluant en outre un système d'automatisation responsable de la lecture d'un matériau de source conformément à la planification.

6. Système selon la revendication 5, incluant un outre un gestionnaire de support d'information pour une sous-gestion d'un matériau de source.

7. Système selon l'une quelconque des revendications 1 à 6, dans lequel le contrôleur de multiplexage commande et formate le multiplexeur conformément aux composantes vidéo, audio et de données requises.

8. Système selon l'une quelconque des revendications 1 à 7, dans lequel les modifications au niveau de la planification d'événement sont disséminées sur le synchroniseur d'événement, sur le cache de données, sur le contrôleur d'information de service, sur le contrôleur de multiplexeur et sur le contrôleur d'accès conditionnel lorsque requis.

9. Système selon l'une quelconque des revendications 1 à 8, dans lequel le cache de données maintient une fenêtre de données d'événement de six heures.

10. Procédé de gestion des composantes d'un système de diffusion vidéo numérique en réponse à une planification d'événements de diffusion ou à une ou plusieurs modifications de replanification apportée(s) à la planification d'événement, le système de diffusion fonctionnant pour générer un signal de multiplexage numérique de sortie comprenant plusieurs canaux et comportant des éléments système comprenant un synchroniseur d'événement qui inclut un cache de données, un contrôleur d'information de service, un multiplexeur, un contrôleur de multiplexeur et un contrôleur d'accès conditionnel incluant un centre de commande de diffusion, le procédé comprenant les étapes de:
mise à jour des données stockées dans le cache de données en réponse aux événements de diffusion ou à la modification ou aux modifications de replanification apportée(s) à la planification d'événements de diffusion;
synchronisation des données mises à jour en temps réel sur les différents éléments système afin d'assurer un référencement correct; et
formatage du signal de multiplexage numérique de sortie conformément aux événements diffusés ou à la modification ou aux modifications apportée(s) à la planification.

11. Procédé selon la revendication 10, incluant en outre le stockage de toute l'information se rapportant à un événement incluant un instant de début nominal, des services d'accès conditionnels, des restrictions de coupure et un nombre de langues de sous-titre dans une base de données de planification.

12. Procédé selon la revendication 10 ou 11, incluant en outre la réception de repères temps réel qui identifient le début d'événements de programme au niveau du synchroniseur d'événement.

13. Procédé selon l'une quelconque des revendications 10, 11 et 12, comprenant en outre la commande et le formatage du multiplexeur conformément aux composantes vidéo, audio et de données requises.

14. Procédé selon l'une quelconque des revendications 10 à 13, comprenant en outre la dissémination de modifications apportées à la planification d'événement sur le synchroniseur d'événement, sur le cache de données, sur le contrôleur d'information de service, sur le contrôleur de multiplexeur et sur le contrôleur d'accès conditionnel lorsque requis.
